# EUROPEAN PATENT APPLICATION

(11) **EP 3 988 410 A1**
(43) Date of publication of application: **27.04.2022**
(21) Application number: 21204181.8
(22) Date of filing: 22.10.2021
(51) Int. Cl.: B60T 13/26, B60T 15/18, B60T 8/32, B60T 8/34, B60T 13/14, B60T 8/172

(54) **CIRCUIT, VALVE AND BRAKING SYSTEM FOR TOWING VEHICLES**

(30) Priority: 22.10.2020 IT 202000024994
(71) Applicant: Slanzi Oleodinamica S.r.l., 42017 Novellara (IT)
(72) Inventor: ANNONI, Matteo, 42017 NOVELLARA (RE) (IT); VENTURI, Luca, 42017 NOVELLARA (RE) (IT)
(74) Representative: Cataldi, Giulia

(57) **Abstract**

A circuit, valve, and hydraulic braking system for towing vehicles, i.e., a piece of agricultural or forestry machinery, with one pressure line and a towed vehicle, i.e., a trailer, with two pressure lines that comply with Regulation (EU) No 167/2013.

## Description

### PRIORITY CLAIM

This application claims priority from Italian Patent Application No. 102020000024994 filed on 22 October 2020.

### TECHNICAL SECTOR

This invention relates to a circuit, valve, and hydraulic braking system for a towing vehicle, i.e., a piece of agricultural or forestry machinery, with a single pressure line and a towed vehicle, i.e., a trailer with two pressure lines.

### PRIOR ART

In particular, this invention relates to a circuit, valve, and hydraulic braking system configured to enable a towing vehicle that complies with Italian standard CUNA NC341-01 (in other words a towing vehicle that has a single pressure line) to hydraulically activate a towed vehicle, for example a trailer, compliant with European Regulation (EU) 167/2013 (in other words, a towed vehicle with two pressure lines).

More specifically, European Regulation (EU) 167/2013 concerns the specifications relating to braking vehicles for the purposes of approving both towing vehicles, like agricultural and forestry machinery, and towed vehicles, like trailers. European Regulation (EU) 167/2013 requires, inter alia, that a towing vehicle should have a main line traversed by high-pressure oil and a secondary line traversed by low-pressure oil that are separated from each other so that one line can ensure the braking of the towed vehicle even if the other line malfunctions.

According to recent regulations, it is also necessary that the towed vehicle, i.e., a trailer, be provided, in its turn, with a double-line braking circuit, i.e., one that has a high-pressure line, generally operating at approximately 130 bars, and a low-pressure line, generally operating at approximately 30 bars. A braking circuit of this type is known from EP 3 202 629 A1 and is provided with two lines of incoming pressurised oil on the side of the towing vehicle and two lines of pressurised oil on the side of the towed vehicle.

In any case, there are still towing vehicles on the market that precede the entry into force of Regulation (EU) 167/2013 and provided with a single pressure line in compliance with the previous Italian regulation CUNA NC341-01.

### SUBJECT OF THE INVENTION

The purpose of this invention is that of providing a circuit, valve, and hydraulic braking system able to adapt a towing vehicle provided with a single pressure line to a towed vehicle with two pressure lines.

The purpose of this invention is to provide a circuit, valve, and hydraulic braking system that overcome the drawbacks described above.

According to this invention, a hydraulic braking circuit, as described in the attached claims, is provided.

According to this invention, a valve, as described in the attached claims, is provided.

According to this invention, a hydraulic braking system, as described in the attached claims, is provided.

### BRIEF DESCRIPTION OF THE DRAWINGS

The invention will now be described with reference to the attached drawings that illustrate non-limiting embodiments thereof:
- Figure 1 illustrates a table of Italian regulation CUNA NC341-01 relating to the operating curve of the braking pressure, according to the prior art, of a towing vehicle with a single pressure line;
- Figure 2 illustrates a table of European Regulation (EU) 167/2013 relating to the operating curves of braking pressures, according to the prior art, of a towing vehicle with two pressure lines;
- Figure 3 is a schematic view, and with some parts removed for clarity, of a system according to this invention, in an operating configuration;
- Figure 4 is a schematic view of a variant of a detail of a hydraulic system according to this invention; and,
- Figure 5 is a schematic view of an additional variant of a detail of a system according to this invention.

### PREFERRED EMBODIMENT OF THE INVENTION

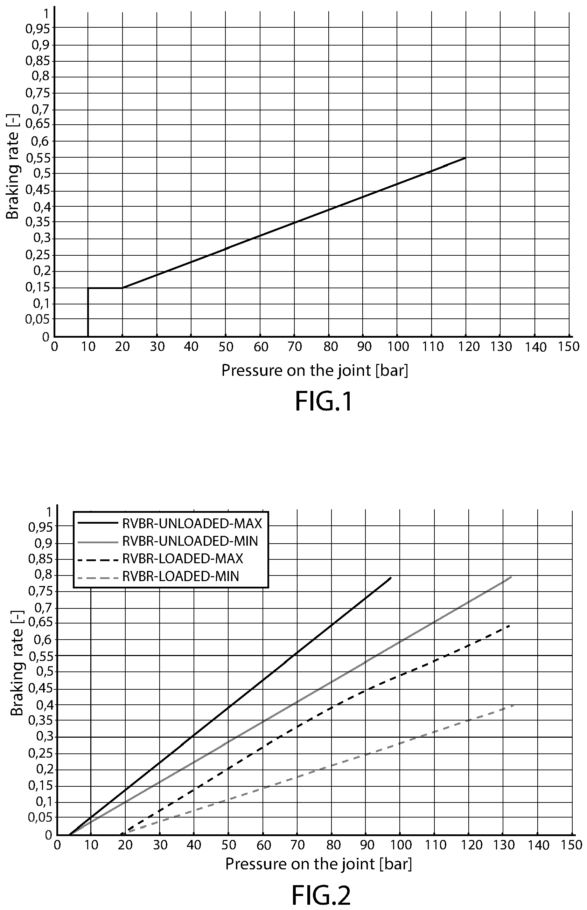

Figure 1 illustrates a table of Italian regulation CUNA NC341-01 relating to the operating curve, according to the prior art, of the pressure on the braking joint of a towing vehicle with a single pressure line and operating before the introduction of European Regulation (EU) 167/2013. In contrast, Figure 2 illustrates a table of European Regulation (EU) 167/2013 relating to the operating curves of braking pressures, according to the prior art, of a towing vehicle with two pressure lines. In Figures 1 and 2, the value of the pressure is indicated on the abscissa and the braking rate applied by the operator is indicated on the ordinate.

From the comparison of the operating curves illustrated in Figures 1 and 2, it should be noted that, according to the Italian regulation CUNA NC341-01, when the towing vehicle with a single pressure line is switched on and the joint is connected to the towed vehicle, the pressure of the oil on the coupling joint has a value indicatively ranging between 10 and 15 bar. In any case, according to European Regulation (EU) 167/2013, when the towing vehicle with two pressure lines is switched on and connected to a towed vehicle, the pressure of the oil along the control line must range between 0 and 2 bars.

Therefore, in order to adapt a towing vehicle with a single pressure line to the European Regulations (EU) 167/2013, it is necessary to lower the value of the pressure at the joint connecting to the switched-on towing vehicle and connected to the towed vehicle.

As will be illustrated better below, this invention makes it possible to modulate the operating curve of the pressure on the braking joint of a towing vehicle with a single pressure line (for example, towing vehicles according to Italian regulation CUNA NC341-01) in order to adapt the operation thereof to the requirements of the new European Regulation (EU) 167/2013. In particular, the purpose of this invention is to modulate, in particular reduce, the oil pressure along the control line when the towing vehicle is switched on and the joint is connected to the towed vehicle.

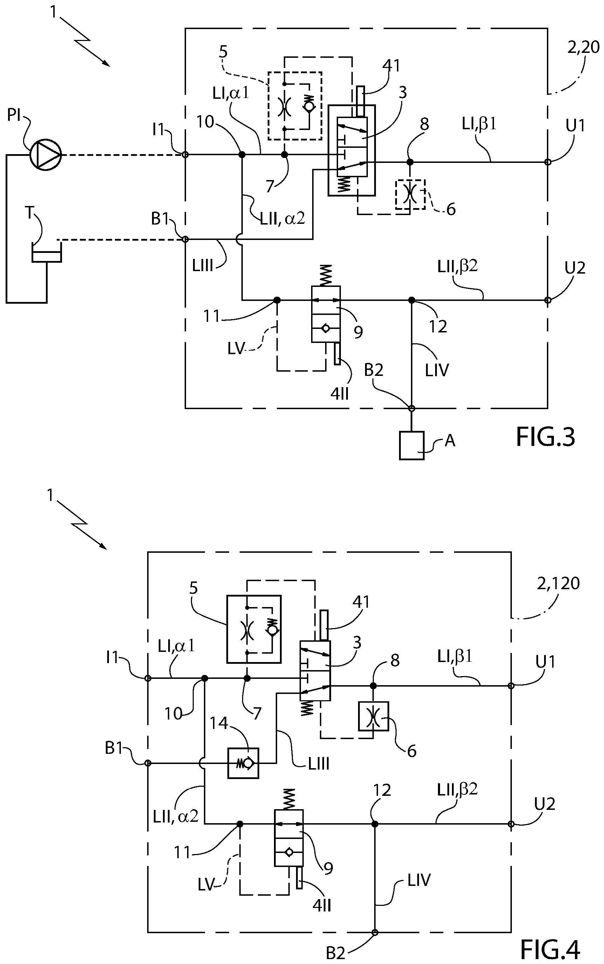

In Figure 3, the reference number 1 indicates, as a whole, the outline of a hydraulic braking system according to this invention. The system 1 is configured to interact, in use, with a system (of a known type and partially illustrated) of a towing vehicle with one pressure line and the system (of a known type and not illustrated) of a towing vehicle with two pressure lines.

In Figure 3, the system 1 is only illustrated in part; in particular, the part that concerns an adaptation circuit 20 is simply outlined.

Advantageously, the circuit 20 is made within a single valve 2 according to this invention, indicated hereinafter as the adaptor valve 2. The adaptor valve 2 is configured to be installed so as to be fluidically placed between the towing vehicle system and the towed vehicle system. In particular, the valve 2 is configured to be installed at the hydraulic joint between the towing vehicle and the towed vehicle.

The system 1 comprises, in particular, a main oil delivery PI and a discharge T. Without thereby losing generality, according to the example illustrated in the figures, the system 1 comprises, in addition, an accumulator A. According to one variant not illustrated, the system 1 may not have an accumulator A.

The main delivery PI is configured to circulate pressurised oil along a main line LI.

For example, but not necessarily, the main delivery PI is a hydraulic pump that withdraws oil from an atmospheric pressure tank, generally the tank is connected to the discharge T, so as to recirculate the oil in the system 1.

The accumulator A is configured, in a known way, to be filled with a given volume of oil under a pre-set pressure (according to regulations indicatively around 150 bar). The accumulator A may reach pressures that are equal to or above those of the high-pressure main line LI.

The adaptor valve 2 is advantageously configured to enable the braking pressures curve to comply, in use, with European Regulation (EU) 167/2013.

In Figure 3, the circuit 20 that is formed within the valve 2 is delimited in dashed lines.

In particular, the circuit 20 has:
- an inlet I1 that receives, in use, the pressurised oil from the main delivery PI and along the main line LI;
- a mouth B1 connecting to the discharge T;
- a mouth B2 connecting to the accumulator A;
- an outlet U1 for oil from the main branch LI;
- an outlet U2 for oil from the secondary branch LII.

In other words, the circuit 20 has a single inlet I1 for oil under pressure and two outlets U1, U2 for oil under pressure.

The circuit 20 has, in addition:
- a main branch LI, which connects the inlet I1 with the outlet U1;
- a secondary branch LII, which connects the inlet I1 with the outlet U2;
- a discharge branch LIII, which connects the main branch LI with the mouth B1; and
- a transfer branch LIV, which connects the secondary branch LII with the mouth B2.

The circuit 20 comprises a two-position and three-way slide 3, which is installed along the main branch LI; and a control system 4I of the slide 3.

Without thereby losing generality, it should be specified that the control system 4I of the slide 3 may be of any type, for example, hydraulic and/or mechanic and/or electric and/or pneumatic, etc.

Advantageously, the slide 3 is configured to adjust, in particular to lower, the pressure value of the oil coming from the inlet I1 and flowing towards the outlet U1.

According to the example illustrated, the circuit 20 comprises, in addition:
- a damper 5 installed along the main branch LI upstream of the slide 3; and
- a damper 6 installed along the main branch LI downstream of the slide 3.

According to a variant not illustrated, the circuit 20 may not have the damper 5 or 6.

It should be specified that the terms upstream and downstream are used with reference to the direction of the oil's flow.

The slide 3 divides the main branch LI into an upstream portion α1 and a downstream portion β1. The slide 3 is activated by the control system 4I, so as to adjust the pressure of the oil along the downstream portion β1.

The upstream damper 5 connects the slide 3 with the upstream portion α1 at a node 7.

The downstream damper 6 connects the slide 3 with the downstream portion β1 at a node 8.

The circuit 20 comprises, in addition:
- a check valve 9 installed along the secondary branch LII; and
- a control system 411 of the check valve 9.

Without thereby losing generality, it should be specified that the control system 411 of the slide 3 may be of any type, for example, hydraulic (as illustrated in the figures) and/or mechanic and/or electric and/or pneumatic, etc.

The check valve 9 is a two-way and two-position valve. The check valve 9 divides the secondary branch LII into an upstream portion α2 and a downstream portion β2.

According to the example illustrated in the figures, the secondary branch LII is connected to the main branch LI at a node 10, which is arranged between the inlet I1 and the node 7. According to a variant not illustrated, the secondary branch LII receives the oil directly from the oil delivery PI.

The circuit 20 has a control branch LV that connects the check valve 9 to the secondary branch LII at a node 11 placed upstream of the check valve 9.

The transfer branch LIV connects the mouth B2 with the secondary branch LII at a node 12 downstream of the check valve 9. In other words, the node 12 is arranged between the check valve 9 and the outlet U2.

In Figure 4, the reference number 120 indicates a variant of the hydraulic circuit according to this invention. In Figure 4, the components in common with the circuit 20 illustrated in Figure 3 maintain the same numbering and are considered as included here without repeating them (for brevity's sake). The circuit 120 comprises, in addition, a back-pressure valve 14 along the discharge branch T. In this way, it is possible to adjust the minimum value of the oil pressure to enable the flow of oil from the upstream portion β1 of the slide 3 towards the discharge T.

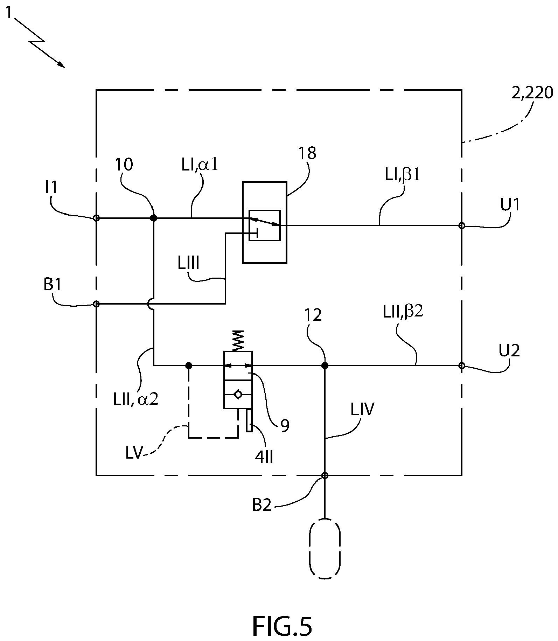

In Figure 5, the reference number 220 indicates an additional variant of the hydraulic circuit according to this invention. In Figure 5, the components in common with the circuit 20 maintain the same numbering and are considered as included here without repeating them (for brevity's sake).

The variant illustrated in Figure 5 illustrates a system dedicated to towing vehicles CEE and made according to the provisions prior to European Regulation (EU) 167/2013. In particular, the circuit 220 comprises a fixed slide 18 instead of a slide 3. According to an alternative to what is illustrated in Figure 5, the circuit 220 simply has a connection of the main branch LI between the inlet I1 and the outlet U1 instead of the fixed slide 18.

According to a variant not illustrated, the circuit 20 may not have the dampers 5 and 6.

In use, the circuit 20 is connected both to a towing vehicle system and to a towed vehicle system. In particular, the inlet I1, the mouths B1 and B2 of the circuit 20 are connected with the pressurised oil delivery PI, the discharge T, and the accumulator A. Similarly, the outlets U1 and U2 of the circuit 20 are connected with two corresponding pressure lines of the towed vehicle.

Once the towing vehicle is switched on, the pressurised oil is pushed from the oil delivery PI of the towing vehicle system through the circuit 20 to the inlet I1. Within the circuit 20, the pressurised oil (at a pressure of approximately 130 bar) flows both along the main branch LI and along the secondary branch LII.

Within the circuit 20, the check valve 9 makes it possible to fill the secondary branch LII and adjust the pressure of the oil along the secondary branch LII itself.

Preferably, the check valve 9 is configured to obtain, along the secondary branch LII, the working pressure required by European Regulation (EU) 167/2013.

Advantageously, the pressure value along the secondary branch LII may be maintained thanks to the action of the maintenance accumulator A. Preferably, the accumulator A may be chosen from within a group of accumulators A that are different to each other due to different technical specifications. Advantageously, the type of accumulator A is chosen depending on the type of towed vehicle hooked to the towing vehicle.

It should be noted that filling the accumulator A takes place during installation of the accumulator A itself on board the towing vehicle. In order to fill the accumulator A, the operator must perform an extended braking so as to fill both the secondary branch LII and the accumulator A. In this way, thanks to the extended braking, one charges the accumulator A and reaches the oil pressure value to unblock the double-line towed vehicle.

In use, once the accumulator A is charged, the slide 3 of the main line L1 receives the pressurised oil from the oil delivery PI. In the rest position, the slide 3 places the discharge T and the outlet U1 in fluidic communication. In the position controlled by the control system 4I, the slide 3 places the inlet I1 and the outlet U1 in fluidic communication.

Advantageously, the control system 4I acting on the slide 3 brings the pressure value along the downstream portion β1 of the slide 3 to between 0 and 2 bar, according to the specifications of European Regulation (EU) 167/2013, when the towing vehicle is started up and placed under pressure.

During use of the towing vehicle, when the threshold value between 10 and 15 bars is exceeded, the slide 3 increases the pressure proportionally to the pressure at the inlet until the maximum value allowed is reached, as a function of the braking action generated by the operator pressing the brake of the towing vehicle.

Advantageously, the change in pressure at the outlet U1 is controlled in its dynamic effects by the dampers 5 and 6. In particular, the dampers 5 and 6 advantageously mitigate the instability effects in the passage of the slide 3 position from that of delivering towards the outlet U1 to that of connecting with the discharge T.

In addition, thanks to the presence of the connection with the discharge T at the slide 3, it is, advantageously, possible to discharge the quantity of oil needed upon release of the towed vehicle.

Advantageously, the presence of the three-way slide 3 makes it possible to correctly synchronise the pressure of the inlet delivery PI with the oil pressure at the outlet U1.

Advantageously, the slide 3 and the check valve 9 have sealing capacities. In this way, advantageously, the valve 2 does not leak. It can be seen that, in this configuration, the slide 2 may not have sealing capacities.

Advantageously, the valve 2 that integrates a circuit 20, 120, 220 of the type described above is compact and simple and economical to produce. Therefore, the valve 2 of the type described above enables a reduction in costs for adapting the towing vehicle with one pressure line to a towed vehicle with two pressure lines.

## Claims

1. A hydraulic circuit (20; 120; 220) configured to be connected both to a braking system (1) of a towing vehicle, namely of a piece of agricultural or forestry machinery, which has a single pressure line and to a towed vehicle, for example a trailer, which has two pressure lines; the circuit (20; 120; 220) having: a single inlet (II) for oil under pressure; a first outlet (U1); a second outlet (U2); a first outside connection mouth (B2), which is hydraulically connected, in use, to an accumulator (A); a main branch (LI), which connects the inlet (II) to the first outlet (U1); a secondary branch (LII), which connects the main branch (LI) to the second outlet (U2) at a first node (10); a transfer branch (LIV), which connects the first connection mouth (B2) to the secondary branch (LII) at a second node (12); the circuit (20; 120; 220) comprising: a check valve (9), which is installed along the secondary branch (LII); wherein said second node (12) is interposed between the check valve (9) and the second outlet (U2).l

2. A hydraulic circuit (20; 120; 220) according to claim 1, wherein the check valve (9) is a two-way and two-position valve; said check valve (9) having a control branch (LV), which connects the check valve (9) to the secondary branch (LII) at a third node (11) arranged upstream of the check valve (9).

3. A hydraulic circuit (20; 120) according to any one of the preceding claims and having a second connection mouth (B1), which, in use, is in fluid connection with the discharge (T); the circuit (20; 120) comprising a two-position and three-way slide (3), which is installed along the main branch (LI); the slide (3) divides the main branch (LI) into an upstream portion (α1) and a downstream portion (β1); the circuit (20; 120) having a discharge branch (LIII), which connects said second connection mouth (B1) to the slide (3); the circuit (20; 120) comprising a control system (41), which operates said slide (3) so as to adjust the pressure of the oil along the downstream portion (β1) of the main branch (LI).

4. A hydraulic circuit (20; 120) according to claim 3 and comprising: a first damper (5), which is installed along the main branch (LI) upstream from the slide (3); and a second damper (6), which is installed along the main branch (LI) downstream of the slide (3).

5. A hydraulic circuit (20; 120; 220) according to any one of the preceding claims, wherein the slide (3) and/or the check valve (9) have sealing capacities.

6. A hydraulic circuit (20; 120) according to any one of the claims from 3 to 5 and comprising a back-pressure valve (14) along the discharge branch (LIII).

7. A hydraulic circuit (220) according to claim 1 or 2 and having a second connection mouth (B1), which, in use, is in fluid connection with the discharge (T); the circuit (220) comprising a fixed slide (18), which is installed along the main branch (LI); the fixed slide (18) divides the main branch (LI) into an upstream portion (α1) and a downstream portion (β1); the circuit (220) having a discharge branch (LIII), which connects said second connection mouth (B1) to the fixed slide (18).

8. A valve for a hydraulic braking system (1) comprising a body where a hydraulic circuit (20; 120; 220) according to any one of the claims from 1 to 7 is obtained.

9. A hydraulic braking system (1) for a towing vehicle with one pressure line and a towed vehicle with two pressure lines; the system (1) comprising a high-pressure oil delivery (PI), a discharge (T) and an accumulator (A), which is configured to maintain a given volume of oil at a predefined pressure; wherein said system (1) comprises a hydraulic circuit (20; 120; 220) according to any one of the claims from 1 to 8.

10. A hydraulic system (1) according to claim 9, wherein said hydraulic circuit (20; 120; 220) is obtained inside the body of a valve, which is fluidically interposed between the towing vehicle and the towed vehicle.
